# EUROPEAN PATENT SPECIFICATION

(11) **EP 3 885 400 B1**
(45) Date of publication and mention of the grant of the patent: **11.11.2026**
(21) Application number: 21165544.4
(22) Date of filing: 29.03.2021
(51) Int. Cl.: C08J 9/12

(54) **A POLYMERIC FOAM MATERIAL FOR SHOCK PADS IN ARTIFICIAL GRASS SYSTEMS**
POLYMERES SCHAUMMATERIAL FÜR STOSSDÄMPFUNGSSCHICHTEN IN KUNSTRASEN
MATÉRIAU EN MOUSSE POLYMÈRE POUR LES AMORTISSEURS DANS LES SYSTÈMES DE GAZON ARTIFICIEL

(30) Priority: 27.03.2020 NL 2025222
(43) Date of publication of application: 29.09.2021
(73) Proprietor: Innograaf B.V., 6602 ZX Wijchen (NL)
(72) Inventor: NOORDEGRAAF, Jan, 6602 ZX Wijchen (NL)
(74) Representative: Algemeen Octrooi- en Merkenbureau B.V.

(56) References cited:
- WO-A1-2020/000336
- CN-A- 103 113 651
- CN-A- 109 485 977
- US-A- 4 761 328
- US-A1- 2002 120 022
- US-A1- 2009 305 029
- US-A1- 2010 196 641
- US-A1- 2010 279 032
- US-A1- 2014 070 442
- US-A1- 2018 001 522

## Description

Natural grass often does not grow long enough in the season, or is used too intensively, and in such a situation an artificial grass solution must often be used. An artificial grass system solution then consists of several components: polymer grass fibres, a base tufting mat, infill, a shock pad and a sandy surface.

Shock-absorbing pads are usually made of foamed elastomer which provides good energy absorption at a reasonable cost. Such foamed elastomeric material may include polyvinyl chloride, polyethylene, polyurethane or combinations of these and other materials, for instance such as polyvinyl chloride-nitrile rubber or reconstituted rubber. Important criteria in selecting a shock-absorbing pad material include resistance to absorbing water, tensile strength and elongation, open cell versus close cell construction, resistance to chemical attack, low cost, availability in continuous lengths, softness in energy absorbing properties and compression set resistance.

An artificial grass mat is actually much like a carpet mat, which consists of a woven or non-woven backing mat, where short and long fibres of a polymer have been tufted. Whilst 3G turf products can vary in terms of their design and manufacture, they generally all share common components. The turf pile itself is usually made from polyethylene (PE) with a primary backing material of polypropylene (PP) that provides the structure and spacing that the pile is woven into. A secondary backing of a liquid polyurethane (PU) or latex is applied and allowed to set in order to bind the pile to the backing. A so-called infill material is often added between the fibres, which very often consists of cork, wood chips, sand or ground car tires. In recent years there have also been other more technical polymers that are used as infill, even biodegradable polymers can be used. A stabilising infill is used to keep the PE fibres vertical during use, and a performance infill provides the correct level of impact resistance to reduce injuries and provide a similar feeling to natural grass. Very often a so-called shock pad is placed under the artificial turf, in which holes have been made that can cause a drainage of the sports field. The use of such a shock pad underneath the mat reduces the amount of performance infill. An average artificial turf pitch of 106 x 71 meters with styrene-butadiene rubber (SBR) infill (the most common infill type) weights around 36 kg per square meter. This means that the total pitch weighs around 274 tonnes, wherein around half of this is the sand stabilising infill and 44% is the SBR infill. The remainder is the plastic-based turf itself.

The environmental impacts of these components are therefore often dominated by the infill material. Similarly, the use of a shock pad can reduce the need for infill material and therefore, also has a large bearing on the environmental impact of the turf system. A shock pad can also be used to either provide more shock resistance or to reduce the need for infill. In practice just under two thirds of installations do not utilise a shock pad, with the remaining mainly comprised of polyethylene (PE) or a blend of recycled SBR bound and polyurethane (PU). SBR installations generally tend not to include a shock pad since the costs of incorporating a sufficiently thick layer of infill to provide this function are relatively low for SBR. EPDM and TPE installations are more likely to include a shock pad, partly due to the higher cost of these materials. By introducing a shock pad the infill density can be reduced whilst retaining similar performance characteristics. The installation of a shock pad can greatly reduce the environmental impact when used alongside virgin polymer infills due to the reduction in the need for infill by 50-60%. Where a shock pad is used, it is very environmentally beneficial to leave it in place for reuse when a new turf is installed. Reusing it need not impact performance quality of the pitch.

The so-called shock pad consists of a foamed polyolefin polymer or foamed polyolefin polymer beads that are glued together. A polyolefin is a type of polymer produced from a simple olefin (also called an alkene with the general formula CₙH₂ₙ) as a monomer. Examples of thermoplastic polyolefins are polyethylene (PE) and polypropylene (PP).

International application WO2013/060634 relates to a shock pad for artificial turf systems. Such a shock pad is a three-dimensional entangled mat of extruded filaments made from a thermoplastic elastomeric polymer, namely a thermoplastic polyurethane elastomeric polymer, wherein the thermoplastic polyurethane elastomeric polymer is a polyether-based thermoplastic polyurethane elastomeric polymer.

European application EP 0 424 080 relates to a shock absorbing pad structure for athletic equipment comprising a flexible enclosure having a cavity and a flexible foam member disposed within the cavity, the foam member having an undulated configuration formed by a plurality of elevations and depressions arranged in an alternating, staggered relationship with respect to one another, the foam member being an open-cell foam material, such as a polyolefin foam, such as polyurethane foam.

European application EP 0 168 545 relates to an artificial turf assembly comprising a layer of artificial turf bonded to a unitary, shock-absorbing, polymeric pad having a vertically asymmetric compression resistance, said pad having an upper layer and a lower layer, wherein said upper layer comprises a polymer selected from the group consisting of polyvinyl chloride, a polyvinyl chloride-nitrile rubber and a reconstituted rubber, and wherein said lower layer comprises a polymer which is the same as the upper layer or polyethylene or polypropylene.

US patent application US2020063379 relates to a turf underlayment layer for supporting an artificial turf assembly, the turf underlayment layer comprising a plurality of panels assembled together, the panels being made from a plurality of polyolefin beads bonded together by at least one of pressure and heat to produce a substantially water-impervious surface.

International application WO2005019533 relates to a multi-layered sports playing field for use over a base layer, said playing field including a top layer made of substantially artificial material simulating a natural playing surface such as grass and at least one padding layer positionable thereunder between said top layer and said base layer, said padding layer being porous and breathable to allow liquids and air to freely pass therethrough, said padding layer including a plurality of discrete beads of substantially elastic, resilient material wherein portions of adjacent beads abut one another and other portions of said adjacent beads are spaced from each other to create interstitial spaces therebetween and wherein substantially all of said adjacent beads are integrally joined together at the abutting portions thereof. The beads are made of foam, i.e. a closed cell foam, for example polypropylene or polyethylene.

US patent application US2018355561 relates to an impact absorption panel, the panels being made from a plurality of polyolefin beads, i.e. polypropylene, the plurality of polyolefin beads bonded together by at least one of pressure and heat to produce a substantially water-impervious surface.

Substructures for a sports field have been disclosed in, inter alia, French patent publication FR 2 395 357, US patent application US 2004/086664, German Offenlegungsschrift DE 38 35 880, European application EP 1 428 935, International application WO2006007862, US Patent US 5,104,712.

WO2020000336 relates to a composition suitable for making uncrosslinked low density polyethylene foam comprising: at least 50 weight percent low density polyethylene based on the total weight of the composition, wherein the low density polyethylene has a density of 0.915 to 0.930 g/cm³ and a melt index of 1 to 4 g/10 minutes; and polytetrafluoroethylene having an average particle size of one micron to 15 microns.

US2018001522 relates to process of forming low density expanded polyethylene foam.

US2009305029 relates to an extruded structure, comprising: an ethylenic polymer material, comprising: from about 2 wt. % to about 20 wt. % of at least one of ethylene vinyl acetate, GMS, and talc; from about 86% by volume to about 98% by volume open cells; and an external impervious skin.

US4761328 relates to a low density article comprising a flexible, expanded, closed-cell polyethylene sheet and a material covering for at least one side of the polyethylene sheet.

US2010196641 relates to a physically blown polyethylene foam comprising: a blend comprising 95.5% by weight-99.5% by weight low density polyethylene and 0.5% by weight-4.5% by weight high density polyethylene and a nucleating agent.

CN103113651 and CN109485977 relate to a method for producing high-foaming EPE pearl wool by use of a carbon dioxide foaming agent.

US2002120022 relates to an extrudable, expandable composition for producing stable, low density polyolefin foam products, said composition comprising: a plasticized polyolefin resin; an aging modifier present in an amount sufficient to control shrinkage of the foam; and a blowing agent for expanding the composition comprising carbon dioxide and a hydrocarbon selected from the group consisting of n-butane, isobutane, propane, and mixtures thereof, said carbon dioxide being present in an amount by weight of from 1 to less than 20% by weight of the blowing agent.

US2010279032 relates to a synthetic turf surface comprising: a synthetic grass carpet having a flexible base sheet, and a shock absorbing pad, wherein the shock absorbing pad comprises a non-crosslinked polyolefin foam.

US2014070442 relates to a method for producing a multi-layer polyethylene resin foam sheet having a polyethylene resin foam layer and a polyolefin resin layer laminated on at least one side of the polyethylene resin foam layer.

To make a foamed product for an underlay in a sports field, there are a limited number of production methods, i.e. blown sheet, glued sheet matt and particle foamed sheet or shock pad systems.

It appears that the use of a polymer foam used in shock pads is limited to a few specific polymer applications, the table below give some examples and also where it is not used.

**Table 1: Polymer foam used in shock pads**

| **polymer and process** | directly extruded foamed sheet | particle foam moulded to sheet | foam waste pressed sheet |
|---|---|---|---|
| PE polymer | Sekisui cross linked PE 120-200 kg/m3 | **does not exist for Shock pads** | SCHMITZ FOAM 120-150kg/m3 |
| PP polymer | Sekisui cross linked PP 120-200 kg/m3 | Saltex EPP Probase industry standard 40-60kg/m3 | does not exist |

**Table 2: Main features in shock pads**

| **main features** | Sekisui cross linked PE and PP 120-200 kg/m3 | Saltex EPP Probase industry standard 40-60kg/m3 | SCHMITZ FOAM 120-150kg/m3 |
|---|---|---|---|
| shock property | Too soft for shock pads, too high HIC value | represents the industry standard, considered to be a bit stiff | does not always return to original position, inhomogeneous |
| Environmental | No issues | No issues, represents the industry standard | Leaches heavy metals, varying composition |
| water drainage by | slits cut in the foamed sheet | designed-in moulded openings | porous through its manufacturing process |

Foams having cushioning action will now be discussed.

Since polyethylene foam is very difficult to foam, a so-called cross linking of the polymer is often used. Taiwanese patent application TW201941930 discloses a method for manufacturing a polyethylene resin extruded foam sheet having excellent compression properties and an excellent surface state while suppressing generation of wrinkle. US patent application US2011272620 relates to a process comprising physical foaming a master batch comprising: a nucleating organic compound which, on changing to the solid phase, forms crystals and which in its melt phase is soluble in the molten polyethylene and polyethylene. Japanese patent application JPH0543731 relates to a method for manufacturing a cross-linked moulded product by moulding 90 to 40 parts by weight of polyethylene having a density of 0.926 g/cm³ or more, 10 to 60 parts by weight of linear low density polyethylene (L-LDPE) having a density of 0.918 to 0.940 g/cm³, and a pyrolytic foaming agent, irradiating the composition with ionizing radiation, and then subjecting the composition to heat foaming. Japanese patent application JPH07258445 relates to a method for producing a crosslinked polyolefin-based resin foam, comprising: forming a foamable moulded body by melt-kneading at a temperature; irradiating the mixed resin composed of 40 to 80% by weight of a polypropylene resin, 15 to 55% by weight of a polyethylene resin and 5 to 45% by weight of a polybutene resin, with ionizing radiation to crosslink the resin.

Japanese patent application JP2019183121 relates to composite resin particles for foaming containing a polyethylene resin, an ethylene copolymer, and a polystyrene resin in a mass ratio of the total amount of the polyethylene resin and the ethylene copolymer/polystyrene resin = 5/95 to 35/65, wherein the polyethylene resin is a linear low-density polyethylene.

Japanese patent application JP2016069471 relates to a foamed particle having a core layer made of a mixed resin in a foamed state and a coating layer made of a polyethylene resin (A) that covers the core layer, wherein the mixed resin is made of a polyethylene resin (B) and polystyrene and a compatibilising agent for compatibilising the two, and the mass ratio of the polyethylene resin (B) and the polystyrene resin in the mixed resin (polyethylene resin (B): (Polystyrene resin) is 25:75 to 50:50.

International application WO2008145267 relates to a physically blown polyethylene foam based on a blend comprising 95.5% by weight - 99.5% by weight low density polyethylene and 0.5% by weight - 4.5% by weight high density polyethylene, a nucleating agent, wherein the nucleating agent is talcum, silica, a mixture of sodium bicarbonate and citric acid, an amide, an amine and/or an ester of a saturated or unsaturated aliphatic (C10-C34) carboxylic acid, and a cell stabiliser, namely glycerol monostearate, glycerol monopalmitate, palmitamide and/or an amide. Such a polyethylene foam is used in the production of films, sheets, profiles, rods and tubes. The density of the physically blown polyethylene foam ranges between 10 and 400 kg/m³, preferably the density of the foam ranges between 20 and 300 kg/m³.

An object of the present invention is to provide a shock pad providing improved shock absorption and/or energy restitution characteristics to artificial turf systems.

Another object of the present invention is to provide artificial turf systems having improved shock absorption and/or energy restitution characteristics, especially over a prolonged period of time.

The present invention thus relates to a shock pad for artificial turf systems, wherein said shock pad comprises of a mix of particle foams, said mix comprises 5 - 95% by weight of low density expanded polyethylene and 95-5% by weight of expanded polypropylene, whereby the sum of the individual quantities together amounts to 100%.

One or more of the above discussed objects of the present invention is achieved by a shock pad comprising low density expanded polyethylene (EPE). Surprisingly, it has been found that such material provides improved shock absorption and/or energy restitution characteristics.

According to the present invention the density of the expanded polyethylene (EPE) according to the present invention ranges from 10 - 100 kg/m³.

In another embodiment of the present invention the density of the expanded polyethylene (EPE) according to the present invention ranges from 15 - 80 kg/m³.

In an embodiment of the present invention the low density expanded polyethylene EPE is made of a blend, on a polymer level, comprising 30 - 80% by weight of low density polyethylene and 20 -70% by weight of high density polyethylene, based on the weight of low density expanded polyethylene EPE. The total sum of components amounts to 100%.

In an embodiment of the present invention the shock pad comprises a mix of particle foams, chosen from the group of EPP, EPS, EPE, ETPU, EPET, EPBAT, EPLA, EPCL, EPHBH, EPHA, EPLA/PBTA blends, EPVC and EPE-PS blend, comprising 5 - 95% by weight of EPE, 95-5% by weight of EPP and 20-50% by weight of a third type of particle foam, chosen from said group of particle foams, whereby the sum of the individual quantities together amounts to 100%. It is clear that the third type of particle foam is different from both EPE and EPP in such a mix of particle foams. In such an embodiment the shock pad comprises a mix of three particle foams, for example 70% by weight of EPE, 20% by weight of EPET and 10% by weight of EPP.

The present invention furthermore relates to an artificial turf system, i.e. a multi-layered sports playing field, comprising at least a shock pad as discussed above. In such an artificial turf system a part of the substructure comprises at least a shock pad as discussed above.

The present invention furthermore relates to a playground system, i.e. a multi-layered playground system, comprising at least a shock pad as discussed above. In such a playground system a part of the substructure comprises at least a shock pad as discussed above.

The shock pad may be used as a shock pad under several kinds of playing fields, such as for example rugby pitches, tennis courts, hockey fields, indoor and outdoor playing fields, such as for example volleyball, handball, basketball, gymnastics, indoor and outdoor soccer pitches, children playgrounds and running tracks.

The shock pad according to the present invention further provides a high capacity for drainage of liquid, for example (rain) water, from the artificial turf playing field due to its open three- dimensional structure. The drainage may include both vertical and horizontal drainage capabilities. The shock pad may also comprise one or more additional layers, such as a film, being pervious or impervious to liquid, a layer of fibrous material, such as a woven or a nonwoven, a two-dimensional grid or scrim, or a three-dimensional entangled mat of extruded filaments.

The present inventor made a comparison between commercially available shock pads material and the low density expanded polyethylene (EPE) according to the present invention. In Table 3 (see below) some parameters have been listed for both commercially available shock pads material and low density expanded polyethylene (EPE) according to the present invention. Reference materials shown in Table 3 are Expanded polypropylene particle foam (EPP), recycled ground crosslinked XPE and a possible expanded ETPU foam.

**Table 3: Comparison between commercially available shock pads material and low density expanded polyethylene (EPE).**

| material | Young's Modulus MPa | E, Young's Modulus used for calculation, MPa | kg/m³ density | used thickness, m | relative E for density MPa /m³ |
|---|---|---|---|---|---|
| Polypropylene, EPP Pro Base 23 | 1500-2000 | 1750 | 37,8 | 0,0234 | 66,15 |
| Polyethylene, recycle PRO play 2 Schmitz | 110-450 | 230 | 160 | 0,023 | 36,8 |
| TPU type medium stiffness | 800 | 800 | 180 | 0,023 | 144 |
| Polyethylene, EPE target | 110-450 | 500 | 20 | 0,023 | 10 |

Since recycled XPE cross linked foam and EPP particle foam are used as shock pad materials, the given density can be related to the Young's modulus of the base polymer used. A comparative relative E (Young's modulus) can be calculated, MPa /m³, corrected for the foam density.

ETPU foam could also be envisaged, and is available, but the foam density is higher than for EEP and also its relative price is higher, so although technically feasible, it would not become an economic viable alternative.

Hereinafter, the present invention will be described with reference to the accompanying drawings. However, it should be understood that the invention can be embodied in various forms and thus is not limited to the embodiments described herein. In addition, in order to clearly describe the invention, parts irrelevant to the description of the invention are omitted in the drawings, and like reference numerals designate like parts throughout the specification.

Hereinafter, Examples of the present invention will be described in detail.

Figure 1 shows the HIC value (y) according to EN117 as a function of drop height (x).

Figure 2 shows a front view of components of 3G turf products.

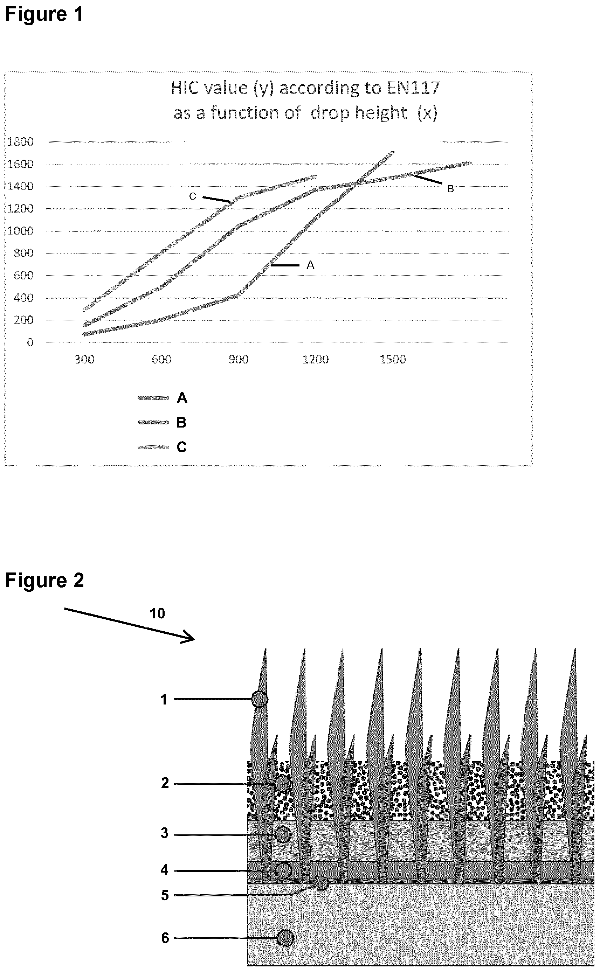

Whilst 3G turf products 10 can vary in terms of their design and manufacture, they generally all share common components (see Figure 2). The turf pile 1 itself is usually made from polyethylene (PE) with a primary backing material 4 of polypropylene (PP) that provides the structure and spacing that the pile 1 is woven into. A secondary backing 5 of a liquid polyurethane (PU) or latex is applied and allowed to set in order to bind the pile 1 to the backing 4. A stabilising infill 3 is used to keep the PE fibres 1 vertical during use, and a performance infill 2 provides the correct level of impact resistance to reduce injuries and provide a similar feeling to natural grass. In some cases, there is also a shock pad 6 underneath which reduces the amount of performance infill 2. It is to be noted that such a turf product 10 is not restricted to the type of materials mentioned above. In some embodiments of a turf product additional layers beneath the shock pad, or additional layers between the secondary backing 5 and shock pad 6 are present. However, the present invention is not restricted to the specific construction and materials shown in Figure 2. Shock pads are 10-50 mm thick, often 22 mm is used, but for particle foam also much thicker up to 50 mm can be used.

### Example

A one step expanded PE based particle foam was obtained using a blend of 70% LDPE and 30% HDPE in a single screw extrude equipped with a 2nd stage melt cooling to which 7-10% CO₂ was added and extruded through a die face cutter, producing an expanded foam with a density of 12-15 gr/l. The following materials were used. LDPE being ExxonMobil^{™} LDPE LD 100.BW with an MFI of 2 g/10 measured according to ISO 1133 at 2.16 kg /190°C and HDPE Relene type 1020FA20 with an MFI of 2 g/10 min from Reliance Industries Mumbai, India, measured according to ISO 1133 at 2.16 kg 190 °C. The 15 gr/I foam had to be moulded using a compression step during moulding towards 20 gr/l. With steam pressure of 3-4 bars and a preimpregnated air pressure, a sheet with a thickness of 2 cm and a density of 20 gr/I was thus obtained and compared to existing materials.

### Testing points; point elastic vs volume elastic

Two factors are important. The relative Young's modulus gives an information about a point elastic property, important for ball bounce. In relation to preventing personal injury, a volume elastic property like the HIC value is used as a predictive parameter. The HIC test device is used worldwide in laboratories, by manufacturers and experts for the testing of protection mats or other damping materials (e.g. on playgrounds) The Head Injury Criterion (HIC) as measured according standard EN 1177 is a measure of the likelihood of head injury arising from an impact. The HIC can be used to assess safety related to vehicles, personal protective gear, and sport equipment. As each impact may damage the plate a new area of the plate shall be impacted for each drop. Tests shall be made at a range of drop heights starting at 300 mm and increasing in 300 mm increments until the HIC value exceeds 1500 or a height of 2000 mm is achieved, whichever occurs sooner.

Crosslinked XPE sheet is not used as it has a too high shock force reduction /elasticity. The ball will not bounce back properly. The new EPE foam with the low density appears to be more volume elastic than EPP and more elastic than the recycled crosslinked higher-density PE foam. Figure 1 shows the HIC value (y) according to EN117 as a function of drop height (x). In Figure 1 the "A" refers to polypropylene, EPP Pro Base 23, "B" to polyethylene, recycle Pro play 20 Schmitz and "C" to polyethylene, EPE according to the present invention.

The point elastic properties can be quantified using the EN15330-1 standard as referred to in the ESTO performance guide (European Synthetic Turf Organisation). Several commercial materials were tested and compared to the obtained sheet of the EPE particle foam product according to the present invention and shown in Table 4.

**Table 4: Comparison between commercial materials and EPE particle foam product**

| Conformity to EN 15330-1 | | | | | |
|---|---|---|---|---|---|
| Test conditions : ESTO Performance Guide for Shockpads except for test with load spreading plate | | | | | |
| | | | results | | |
| shockpad material | density kg/m3 | sheet tickness, mm | impression mm | Shock force reduction FR % | pass/fail |
| Polypropylene, EPP Pro Base 23 | 38 | 23 | 8,8 | 69,1 | pass |
| Polyethylene, recycle PRO play 20 Schmitz | 150 | 20 | 5 | 60,6 | pass |
| EPE particle foam | 25 | 20 | 10 | 65 | pass |
| 50/50 blend of EPP Eperan M45 particle foam and EPE particle foam present invention | 39 | 23 | 9,4 | 67 | pass |
| XPE sheet Sekisui | 300 | 10 | 6,8 | 80,5 | nr |
| XPE sheet Sekisui | 250 | 12 | 7,4 | 84 | nr |
| XPE sheet Sekisui | 416 | 12 | 8 | 71,7 | nr |
| XPE sheet Sekisui | 357 | 14 | 8,5 | 48,5 | nr |

| | | | | | |
|---|---|---|---|---|---|
| nr not relevant | | | | | |

The results shown in Table 4 clearly indicate that the impression value of the EPE low density particle foam sheet is positioned between that of EPP particle foam and recycled crosslinked XPE. This means that with much reduced density, properties are surprisingly positioned between the existing and most used materials.

Without being bound to any theory, it is believed that the compressed and glued mix of crosslinked XPE waste is less of a homogenous material as the uniformly moulded EPE particle foam. Moreover, the cell wall forms a rigid honeycomb structure, which may give the foam another behaviour than non-cross linked foams. The intrinsic deformation of the polymer chain is altered by crosslinking with is not the case with a not cross-linked foam of the present invention.

Moreover, with the present invention it is now possible to prepare a deliberate mix of pre-expanded particle foams and to mould a shock pad from these materials. Table 4 also shows an example of a shock pad material that is made with 50%(m/m) Kaneka Eperan type M45 18 gr/I together with 50%(m/m) of EPE at 20 gr/I of the present invention. This mix of EPE and EPP particle foam shock pad was compression moulded to a density of 25 gr/, allowing to demonstrate that it is possible to produce a controlled blend of properties of the individual materials.

## Claims

1. A shock pad for artificial turf systems, wherein said shock pad comprises of a mix of particle foams, said mix comprises 5 - 95% by weight of low density expanded polyethylene and 95-5% by weight of expanded polypropylene, whereby the sum of the individual quantities together amounts to 100%, wherein said low density of expanded polyethylene ranges from 10 - 100 kg/m³.

2. A shock pad for artificial turf systems according to claim 1, wherein said low density expanded polyethylene ranges from 15 - 80 kg/m³

3. A shock pad for artificial turf systems according to any one or more of the preceding claims, wherein said low density expanded polyethylene is made of a blend, on a polymer level, comprising 30 - 80% by weight of low density polyethylene and 20-70% by weight of high density polyethylene, based on the weight of low density expanded polyethylene.

4. A shock pad for artificial turf systems according to any one or more of claim 1-3, wherein said shock pad further comprises 20-50% by weight of a third type of particle foam that is different from low density expanded polyethylene and expanded polypropylene, all types are chosen from the group of particle foams of EPS, ETPU, EPET, EPBAT, EPLA, EPCL, EPHBH, EPHA, EPLA/PBTA blends, EPVC and EPE/PS blend, whereby the sum of the individual quantities together amounts to 100%.

5. A method for manufacturing a shock pad by preparing a mix of pre-expanded particle foams and moulding said mix into said shock pad, wherein said shock pad comprises of a mix of particle foams, said mix comprises 5 - 95% by weight of low density expanded polyethylene and 95-5% by weight of expanded polypropylene, whereby the sum of the individual quantities together amounts to 100%, wherein said low density expanded polyethylene ranges from 10 - 100 kg/m³

6. An artificial turf system comprising at least a shock pad according to any one or more of claims 1-4 or a shock pad obtained according to the method of claim 5.

7. A playground system comprising at least a shock pad according to any one or more of claims 1-4 or a shock pad obtained according to the method of claim 5.

## Patentansprüche

1. Stoßdämpfer für Kunstrasensysteme, wobei der Stoßdämpfer eine Mischung aus Partikelschäumen umfasst, wobei die Mischung 5-95 Gew.- % expandiertes Polyethylen niedriger Dichte und 95-5 Gew.- % expandiertes Polypropylen umfasst, wobei die Summe der einzelnen Mengen zusammen 100 % beträgt, wobei die niedrige Dichte des expandierten Polyethylens im Bereich von 10-100 kg/m³ liegt.

2. Stoßdämpfer für Kunstrasensysteme nach Anspruch 1, wobei das expandierte Polyethylen niedriger Dichte im Bereich von 15-80 kg/m³ liegt.

3. Stoßdämpfer für Kunstrasensysteme nach einem oder mehreren der vorhergehenden Ansprüche, wobei das expandierte Polyethylen niedriger Dichte aus einem Gemisch auf einem Polymerniveau hergestellt ist, das 30-80 Gew.- % Polyethylen niedriger Dichte und 20-70 Gew.- % Polyethylen hoher Dichte basierend auf dem Gewicht des expandierten Polyethylens niedriger Dichte umfasst.

4. Stoßdämpfer für Kunstrasensysteme nach einem oder mehreren der Ansprüche 1-3, wobei der Stoßdämpfer ferner 20-50 Gew.- % eines dritten Typs von Partikelschaum umfasst, der sich von expandiertem Polyethylen niedriger Dichte und expandiertem Polypropylen unterscheidet, wobei alle Typen aus der Gruppe der Partikelschäume von EPS, ETPU, EPET, EPBAT, EPLA, EPCL, EPHBH, EPHA, EPLA/PBTA-Gemischen, EPVC und EPE/PS-Gemisch ausgewählt sind, wobei die Summe aus den einzelnen Mengen zusammen 100 % beträgt.

5. Verfahren zum Herstellen eines Stoßdämpfers durch Herstellen einer Mischung aus vorexpandierten Partikelschäumen und Formen der Mischung zu dem Stoßdämpfer, wobei der Stoßdämpfer eine Mischung aus Partikelschäumen umfasst, wobei die Mischung 5-95 Gew.- % expandiertes Polyethylen niedriger Dichte und 95-5 Gew.- % expandiertes Polypropylen umfasst, wobei die Summe aus den einzelnen Mengen zusammen 100 % beträgt, wobei das expandierte Polyethylen niedriger Dichte im Bereich von 10-100 kg/m³ liegt.

6. Kunstrasensystem, umfassend mindestens einen Stoßdämpfer nach einem oder mehreren der Ansprüche 1-4 oder einen Stoßdämpfer, der nach dem Verfahren nach Anspruch 5 erhalten wird.

7. Spielplatzsystem, umfassend mindestens einen Stoßdämpfer nach einem oder mehreren der Ansprüche 1-4 oder einen Stoßdämpfer, der nach dem Verfahren nach Anspruch 5 erhalten wird.

## Revendications

1. Amortisseur pour systèmes de gazon artificiel, ledit amortisseur comprenant un mélange de mousses particulaires, ledit mélange comprenant 5 à 95 % en poids de polyéthylène expansé de faible densité et 95 à 5 % en poids de polypropylène expansé, moyennant quoi la somme des quantités individuelles s'élève ensemble à 100 %, ladite faible densité de polyéthylène expansé allant de 10 à 100 kg/m³.

2. Amortisseur pour systèmes de gazon artificiel selon la revendication 1, ledit polyéthylène expansé de faible densité allant de 15 à 80 kg/m³.

3. Amortisseur pour systèmes de gazon artificiel selon l'une quelconque ou plusieurs des revendications précédentes, ledit polyéthylène expansé de faible densité étant constitué d'un mélange, au niveau du polymère, comprenant 30 à 80 % en poids de polyéthylène de faible densité et 20 à 70 % en poids de polyéthylène de haute densité, sur la base du poids de polyéthylène expansé de faible densité.

4. Amortisseur pour systèmes de gazon artificiel selon l'une quelconque ou plusieurs des revendications 1 à 3, ledit amortisseur comprenant en outre 20 à 50 % en poids d'un troisième type de mousse particulaire qui est différent du polyéthylène expansé de faible densité et du polypropylène expansé, tous les types étant choisis dans le groupe des mousses particulaires de mélanges EPS, ETPU, EPET, EPBAT, EPLA, EPCL, EPHBH, EPHA, mélanges EPLA/PBTA, EPVC et mélange EPE/PS, moyennant quoi la somme des quantités individuelles s'élève ensemble à 100 %.

5. Procédé permettant la fabrication d'un amortisseur par préparation d'un mélange de mousses particulaires préexpansées et moulage dudit mélange dans ledit amortisseur, ledit amortisseur comprenant un mélange de mousses particulaires, ledit mélange comprenant 5 à 95 % en poids de polyéthylène expansé de faible densité et 95 à 5 % en poids de polypropylène expansé, moyennant quoi la somme des quantités individuelles s'élève ensemble à 100 %, ledit polyéthylène expansé de faible densité allant de 10 à 100 kg/m³.

6. Système de gazon artificiel comprenant au moins un amortisseur selon l'une quelconque ou plusieurs des revendications 1 à 4 ou un amortisseur obtenu selon le procédé de la revendication 5.

7. Système d'aire de jeux comprenant au moins un amortisseur selon l'une quelconque ou plusieurs des revendications 1 à 4 ou un amortisseur obtenu selon le procédé de la revendication 5.
